(19) Europäisches Patentamt
European Patent Office
Office européen des brevets

(11) EP 3 108 040 B1

## (12) FASCICULE DE BREVET EUROPEEN

(45) Date de publication et mention
de la délivrance du brevet:
**22.11.2017 Bulletin 2017/47**

(21) Numéro de dépôt: **15705643.3**

(22) Date de dépôt: **20.01.2015**

(51) Int Cl.:
*C25D 5/56* (2006.01)          *H01M 4/88* (2006.01)
*C25D 3/50* (2006.01)          *C25D 15/00* (2006.01)
*H01M 4/92* (2006.01)

(86) Numéro de dépôt international:
**PCT/FR2015/050137**

(87) Numéro de publication internationale:
**WO 2015/124838 (27.08.2015 Gazette 2015/34)**

(54) **PROCÉDÉ DE PRÉPARATION PAR ÉLECTRODÉPOSITION D'UN ASSEMBLAGE MEMBRANE ÉLECTRODE POUR PILE À COMBUSTIBLE**

VERFAHREN ZUR HERSTELLUNG EINER MEMBRAN-ELEKTRODE-EINHEIT FÜR BRENNSTOFFZELLE MITTELS GALVANISCHER ABSCHEIDUNG

PROCESS OF MANUFACTURING A MEMBRANE ELECTRODE ASSEMBLY FOR FUEL CELL BY ELECTROPLATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2014 FR 1451300**

(43) Date de publication de la demande:
**28.12.2016 Bulletin 2016/52**

(73) Titulaire: **Commissariat à l'Énergie Atomique et aux Énergies Alternatives**
**75015 Paris (FR)**

(72) Inventeur: **FOUDA-ONANA, Frédéric**
**Le Moule 97160 (GP)**

(74) Mandataire: **Cabinet Laurent & Charras**
**Le Contemporain**
**50 Chemin de la Bruyère**
**69574 Dardilly Cedex (FR)**

(56) Documents cités:
**WO-A2-2008/140647          US-A1- 2004 112 754**
**US-B1- 6 277 261**

- **NORES-PONDAL F J ET AL: "Catalytic activity vs. size correlation in platinum catalysts of PEM fuel cells prepared on carbon black by different methods", INTERNATIONAL JOURNAL OF HYDROGEN ENERGY, ELSEVIER SCIENCE PUBLISHERS B.V., BARKING, GB, vol. 34, no. 19, 12 août 2009 (2009-08-12) , pages 8193-8203, XP026641738, ISSN: 0360-3199, DOI: 10.1016/J.IJHYDENE.2009.07.073 [extrait le 2009-08-12]**

**Description**

**DOMAINE DE L'INVENTION**

L'invention concerne un procédé de préparation par électrodéposition d'un assemblage membrane électrode pour pile à combustible, la membrane étant échangeuse de protons.

Le domaine d'utilisation de la présente invention se rapporte particulièrement à la conversion d'énergie chimique en énergie électrique et sous forme de chaleur.

**ETAT ANTERIEUR DE LA TECHNIQUE**

Les piles à combustible, et notamment les PEMFC (pile à combustible à membrane échangeuse de protons), sont relativement attractives eu égard à leur rendement théorique élevé et à la nature non polluante des sous-produits de réaction.

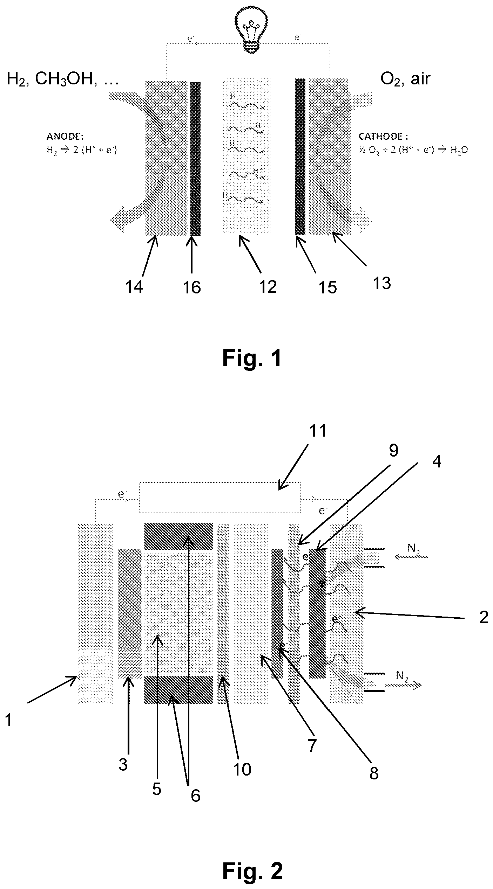

De manière générale, une pile à combustible comprend un AME (Assemblage Membrane Electrodes) tel que celui illustré par la figure 1. La membrane (12) échangeuse de protons est en contact avec une cathode et une anode où se produisent les réactions assurant le fonctionnement de la pile, c'est-à-dire la réduction du comburant (oxygène, air) et l'oxydation du combustible (hydrogène, méthanol...) respectivement.

Ces électrodes (cathode et anode) sont généralement constituées d'une couche catalytique (15, 16) permettant les réactions d'oxydo-réduction, et d'une couche poreuse (13, 14) permettant la diffusion des réactifs et des électrons.

La membrane échangeuse de protons (12) assure le passage des protons formés lors de la réduction du combustible entre l'anode et la cathode. Cependant, elle n'est pas électroniquement conductrice. Un circuit externe assure le passage des électrons formés à l'anode vers la cathode où ils sont recombinés avec les protons pour former de l'eau en présence d'oxygène.

Les matériaux d'électrodes permettant les réactions d'oxydo-réduction sont généralement composés de nanoparticules de carbone combinées à des nanoparticules de métaux nobles (Pt, Pd) ou d'alliages de métaux Pt-X (X = Cu, Ni, Cr, Mn,...). Typiquement, un AME est réalisé par pressage à chaud de deux électrodes poreuses sur les deux faces principales d'une membrane. Ces électrodes contiennent en outre une couche catalytique (matériau d'électrode). Le dépôt de la couche catalytique peut notamment être réalisé par CCM ou par CCB. La technique de CCM (de l'anglais « *Catalyst Coated Membrane* ») consiste à déposer une encre d'électrode sur la membrane. En revanche, la technique de CCB (de l'anglais « *Catalyst Coated Backing* ») consiste à déposer une encre d'électrode sur un support poreux tel qu'une électrode à diffusion de gaz. Afin d'optimiser le taux d'utilisation des particules de métaux nobles (matériau d'électrode), et donc diminuer la quantité utilisée, plusieurs voies ont été développées :

- le matériau d'électrode peut être constitué de particules en alliage à base de métal noble. Cependant, ce type de couche catalytique est préparé par voie chimique, qui a pour principal inconvénient le manque d'homogénéité de la répartition des particules ;

- la nanostructuration du matériau d'électrode, qui permet d'augmenter la surface du matériau d'électrode accessible aux réactifs ($O_2$, électrons, protons). Le matériau d'électrode peut alors se présenter sous la forme de nano-sphères, de particules coeur-coquille, ou de nanofils par exemple. Cependant, ces structures sont relativement complexes à préparer, ce qui rend leur commercialisation difficilement envisageable à l'heure actuelle ;

- l'électrodéposition de particules de platine. Cependant, ce procédé est limité à l'électrodépôt de platine sur une électrode à diffusion de gaz en carbone (procédé CCB), par réduction d'une solution de platine.

Les documents US 2004/112754 A1 et US 6 277 261 B1 par exemple divulguent une méthode de préparation d'un assemblage membrane électrode pour pile à combustible, selon laquelle un précurseur du platine est déposé par pulvérisation sur une membrane électrolytique (Nafion® par exemple) puis réduit au potentiel rédox zéro par voie électrochimique. Cependant, le procédé dans ces documents ne met pas en oeuvre le dépôt d'une composition contenant un précurseur du catalyseur et des particules électroniquement conductrices. Les procédés de l'art antérieur présentent donc certains inconvénients que la présente invention propose de résoudre en améliorant simultanément :

- la répartition des particules catalytiques aux zones accessibles aux électrons et aux ions, et
- l'interface couche active/membrane.

**EXPOSE DE L'INVENTION**

Le Demandeur a mis au point un procédé de dépôt d'un matériau d'électrode permettant d'optimiser les différentes techniques de l'art antérieur.

Ce procédé met en oeuvre une cellule d'électrodéposition dans laquelle la conductivité ionique d'une membrane échangeuse de protons est mise à contribution alors que les procédés de l'art antérieur s'appuient sur la conductivité électronique d'une électrode à diffusion de gaz.

Plus précisément, la présente invention concerne un procédé de préparation d'un assemblage membrane électrode par électrodéposition, comprenant les étapes suivantes :

- dépôt d'une composition contenant au moins un précurseur (ou complexe) d'un métal de transition et des particules électroniquement conductrices, sur une face principale d'une membrane échangeuse de protons ;
- séchage du dépôt ;
- positionnement de la membrane échangeuse de protons dans une cellule d'électrodéposition ;
- réduction du précurseur d'un métal de transition en particules de métal de transition présentant un degré d'oxydation égal à 0, par circulation d'un courant électrique dans la cellule d'électrodéposition ;
- obtention d'un assemblage membrane électrode dont la membrane échangeuse de protons comprend une face principale contenant des particules du métal de transition présentant un degré d'oxydation égal à 0.

Les particules électroniquement conductrices peuvent notamment être du noir de carbone, des nanotubes de carbone, ou des oxydes métalliques dopés.

De manière générale, le dépôt de la composition comprenant le précurseur d'un métal de transition peut être réalisé par différent procédés d'impression comme l'enduction ou plus préférentiellement la pulvérisation (spray).

Le séchage du dépôt ainsi obtenu est avantageusement réalisé lors de la phase de dépôt. Lorsque le dépôt est ainsi réalisé simultanément au dépôt, il est préférentiellement mis en oeuvre en positionnant la membrane échangeuse de protons sur un substrat pouvant notamment être en verre. Le séchage du dépôt est avantageusement réalisé sur une plaque chauffante, le substrat sur lequel est déposée la membrane étant au contact de cette plaque chauffante.

Selon un mode de réalisation particulier, le séchage peut également être réalisé dans une étuve.

De manière avantageuse, la membrane est séchée à une température comprise entre 60 et 80°C, quelle que soit la méthode de séchage, simultanément au dépôt ou non.

Les connaissances générales de l'homme du métier lui permettront d'adapter les méthodes de séchage du dépôt et la durée de séchage qui peut notamment être au moins égale à la durée nécessaire pour réaliser le dépôt.

Par « assemblage membrane électrode », on entend un AME c'est-à-dire une membrane dont chacune des deux faces principales est associée à une électrode, ou un demi-AME c'est-à-dire une membrane dont une seule face principale est associée à une électrode.

Ainsi, et contrairement aux procédés d'électrodéposition de l'art antérieur, une composition à base de métal de transition est déposée sur une membrane échangeuse de protons avant une étape de réduction électrochimique. La membrane permet l'échange de protons mais elle n'est pas conductrice électroniquement, ce qui n'est pas le cas des substrats en carbone de l'art antérieur.

Typiquement, la membrane échangeuse de protons peut être en un matériau choisi dans le groupe comprenant les polymères acides perfluorosulfoniques tels que le Nafion® et l'Aquivion®.

La membrane échangeuse de protons peut être hydratée lors de la mise en oeuvre du procédé.

D'autre part, le précurseur d'un métal de transition peut être avantageusement choisi dans le groupe comprenant les métaux nobles de type platine, palladium, iridium, les alliages de métaux de type Pt-X, Pd-X, ou Ir-X (X = Cu, Ni, Cr, Mn, Co...).

Il peut notamment s'agir d'un composé choisi dans le groupe comprenant $H_2[Pt(OH)_6]$ ; $H_2[Pt(NO_2)_2SO_4]$ ; $(NO_2)_2[Pt(NH_3)_4]$ ; $H_2[PtCl_6]$ ; et leurs mélanges.

Selon un mode de réalisation particulier, le précurseur d'un métal de transition mis en oeuvre est avantageusement anionique et dépourvu d'halogènes. De manière avantageuse, il est anionique et son contre-ion n'est pas un alcalin ou alcalino-terreux.

Les précurseurs anioniques sont préférés afin d'éviter l'éventuelle contamination de la membrane, par échanges entre les protons et les cations du métal de transition.

Le précurseur d'un métal de transition est avantageusement un composé de platine.

La réduction du précurseur d'un métal de transition est avantageusement réalisée à un potentiel (appliqué entre les deux électrodes de la cellule d'électrodéposition) qui est préférentiellement inférieur à 0.7 volts.

Quoi qu'il en soit, et selon un mode de réalisation particulier (précurseur de platine notamment), la fenêtre en potentiel est avantageusement comprise entre -0.2 et 1.1 volts, et plus avantageusement entre -0.2 et 0.5 volts. La borne supérieure de 0.5 V permet d'éviter l'oxydation du métal de transition au degré d'oxydation 0 (Pt(0) par exemple) en oxyde métallique (PtO par exemple). La borne inférieure, limitée à -0.2 V, correspond à une surtension suffisamment importante pour permettre la réaction de génération de $H_2$ sans que celle-ci soit trop excessive. Le cas échéant, l'homme du métier saura adapter la plage de potentiel en fonction du précurseur d'un métal de transition.

L'étape de réduction est réalisée par application d'un signal spécifique qui peut être un signal en tension pulsé ou à balayage, ou un signal en courant pulsé ou à balayage.

La réduction des ions du métal de transition M en M(0) (par exemple Pt en Pt(O)) est assurée soit en appliquant un potentiel inférieur au potentiel d'équilibre $M^{n+}/M$ (par exemple $Pt^{4+}/Pt$) ou en appliquant un courant de réduction (courant négatif) qui permet de réduire le degré d'oxydation du M (par exemple Pt(IV)) au degré 0.

Pour des raisons industrielles, la voie galvanique est plutôt privilégiée étant donné que l'industrie met en oeuvre de nombreux procédés électrochimiques à base de procédé galvanique, tel que l'électroplaquage par exemple.

Le procédé par cyclage en potentiel permet de s'assurer par observation des courbes E vs. i de la réduction des ions du métal de transition M (par exemple Pt), et donc de la présence de particules du métal M à la surface de la membrane.

A l'issue de l'étape de réduction, la taille des particules du métal M est avantageusement nanométrique. Elle peut notamment être comprise entre 4 et 5 nm.

L'homme du métier saura ajuster la nature et l'intensité du courant électrique afin de s'assurer de la réduction intégrale du précurseur d'un métal de transition. En effet, le nombre d'électrons nécessaires est directement proportionnel à la quantité de métal déposée.

Typiquement, la composition contenant au moins un précurseur d'un métal de transition peut également comprendre au moins un additif choisi dans le groupe comprenant :

- un ionomère (Nafion® par exemple), qui permet notamment l'échange des protons ;
- un solvant (isopropanol ou eau par exemple) qui permet notamment la dispersion des particules électroniquement conductrices, et la dissolution du précurseur du métal de transition mis en oeuvre; et
- un humectant (glycérol ou éthylène glycol par exemple) qui assure notamment une bonne mouillabilité à la surface du dépôt. Il présente généralement une température d'ébullition élevée, et permet de maintenir de l'eau dans la couche active, ce qui favorise le transport ionique à travers le dépôt lors de la réduction du précurseur d'un métal de transition.

La réduction du précurseur d'un métal de transition en particules de métal 0 est réalisée sur les particules électroniquement conductrices.

La présence de particules électroniquement conductrices dans la composition contenant un précurseur d'un métal de transition permet notamment d'augmenter la surface développée sans pour autant boucher ou colmater l'accessibilité à la membrane.

Contrairement aux procédés de l'art antérieur dans lesquels les particules de métal 0 sont préparées ex-situ, l'intégralité ou la quasi intégralité du métal déposé est disponible et actif en tant que catalyseur étant donné qu'il est à la fois au contact de la membrane et des particules électroniquement conductrices. En effet, en l'absence de ce contact, il ne pourrait pas y avoir de réduction du métal en métal 0.

L'homme du métier saura adapter les proportions des différents constituants de la composition. De manière générale, la composition d'encre présente un extrait sec pouvant être compris entre 0.5 et 20% en poids.

A titre d'exemple, la composition d'encre déposée peut avantageusement comprendre, avant dépôt (avantageusement par pulvérisation), en poids pour 100 parts en poids de composition :

- 1 à 3 parts de précurseur d'un métal de transition ;
- 1 part de particules électroniquement conductrices ;

- 15 parts d'une solution d'un ionomère, se présentant avantageusement sous forme de dispersion ;
- 0.1 parts d'humectant ;
- 80 parts de solvant.

La quantité de précurseur d'un métal de transition dépend notamment du ratio en poids M/PEC souhaité, PEC désignant les particules électroniquement conductrices, et M le métal de transition au degré 0. De manière générale, le ratio peut être compris entre 10 et 50, en poids.

Ainsi, selon un mode de réalisation très particulier et à titre d'exemple, la composition d'encre peut comprendre, outre le précurseur d'un métal de transition :

- 100 mg de noir de carbone (tel que celui commercialisé sous le nom Vulcan® CX-72) ;
- 1.3 mg de Nafion®, sous forme de dispersion (tel que celui correspondant au grade D521 à 5 wt%) ;
- 8.5 ml de solvant (isopropanol par exemple) ;
- 40 $\mu$l d'humectant (glycérol par exemple).

En outre, la surface principale de la membrane échangeuse de protons sur laquelle est déposée la composition, comprend avantageusement entre 50 et 500 $\mu g_{métal}/cm^2$ (par $cm^2$ de la face principale de la membrane) à l'issue de l'étape de réduction, le métal étant avantageusement le platine. La quantité de précurseur est ajustée en fonction du chargement final en métal de transition souhaitée à la surface de la membrane.

Par exemple, lorsque le chargement final (à l'issue de l'étape de réduction) en platine est compris entre 50 et 500 $\mu g_{Pt}/cm^2$, le chargement initial en Pt(IV) est avantageusement compris entre 130 et 1300 $\mu g/cm^2$ pour le précurseur $H_2PtCl_6$.

Lorsque le précurseur d'un métal de transition comprend des halogènes, l'AME ou demi-AME peut être soumis à un post-traitement. Par exemple, les ions halogénés peuvent être éliminés par oxydation. Il peut notamment s'agir de l'oxydation d'ions Cl$^-$en Cl$_2$, par exemple en soumettant l'électrode à un cyclage en potentiel avantageusement compris entre 50 mV et 1.4 V à 100 mV/s pendant 20 à 30 cycles.

Selon un mode de réalisation particulier, le procédé décrit-ci avant peut être mis en oeuvre sur un demi-AME pour former un AME. Ainsi, les étapes décrites ci-avant (dépôt de la composition de métal de transition, séchage, réduction) sont réalisées sur la face principale d'une membrane dont une face principale est dépourvue de particules de métal 0, et dont l'autre face principale comprend déjà des particules d'un métal de transition. En d'autres termes, la face principale la membrane échangeuse de protons, opposée à la face principale sur laquelle est réalisé le dépôt (avantageusement par pulvérisation), comprend des particules de métal de transition présentant un degré d'oxydation égal à 0, et ce préalablement au dépôt.

Le demi-AME mis en oeuvre peut être obtenu par le procédé selon l'invention. La réalisation d'un AME consiste alors à réaliser un deuxième dépôt à partir d'une composition de métal pouvant être identique ou distincte de celle mise en oeuvre pour préparer le demi-AME.

La présente invention concerne également le demi-AME et l'AME susceptibles d'être obtenus par le procédé décrit ci-avant. Elle a aussi pour objet la pile à combustible (PEMFC) comprenant ce demi-AME ou cet AME.

Ce demi-AME ou cet AME peuvent également être utilisés dans un électrolyseur PEM (membrane échangeuse de protons, de l'anglais « Proton Exchange Membrane »).

L'invention et les avantages qui en découlent ressortiront mieux des figures et des exemples suivants donnés afin d'illustrer l'invention et non de manière limitative.

**DESCRIPTION DES FIGURES**

La figure 1 illustre le schéma d'une pile à combustible conventionnelle.

La figure 2 illustre le schéma de la cellule d'électrodéposition de couche active sur une membrane échangeuse de protons, mise en oeuvre dans le procédé objet de l'invention.

La figure 3 illustre les voltammogrammes des précurseurs $H_2[PtCl_6]$ et $[Pt(NH_3)_4(NO_2)_2]$.

La figure 4a illustre l'image à balayage électronique des particules métalliques d'un demi-AME obtenu selon le procédé objet de l'invention à partir de $H_2[PtCl_6]$.

La figure 4b illustre l'image à balayage électronique des particules métalliques d'un demi-AME obtenu selon le procédé objet de l'invention à partir de $[Pt(NH_3)_4(NO_2)_2]$.

La figure 5a illustre les voltammogrammes, sous une atmosphère d'azote ou d'oxygène, d'un demi-AME obtenu selon le procédé objet de l'invention à partir de $H_2[PtCl_6]$.

La figure 5b illustre une vue agrandie des voltammogrammes de la figure 5a).

**DESCRIPTION DETAILLEE DE L'INVENTION**

La figure 2 illustre une cellule d'électrodéposition pouvant permettre la mise en oeuvre du procédé objet de la présente invention.

Cette cellule comprend :

- un générateur de courant ou de tension (11),
- deux collecteurs de courant, (1) et (2),
- une anode (3) (grille en métal résistant à la corrosion, en tantale par exemple),
- une cathode (carbone par exemple) (4),

- un électrolyte ($H_2SO_4$) (5), disposé entre l'anode (3) et la cathode (4), dans une cellule fermée notamment pas les joints d'étanchéité (6).

Typiquement, l'anode (3) est poreuse, de manière à pouvoir assurer un flux de gaz inerte (azote ou argon par exemple) dans le but d'éviter toute réaction de réduction de l'oxygène à l'anode (3).

Dans le procédé de préparation d'un AME ou d'un demi-AME selon la présente invention, une face principale d'une membrane échangeuse de protons (7) est recouverte d'une composition d'un sel de métal de transition, avantageusement à base de platine.

Ce dépôt (8) est séché pendant la phase de dépôt.

La membrane échangeuse de protons (7) est ensuite placée dans la cellule d'électrodéposition, entre la cathode (4) et l'électrolyte (5). Afin d'assurer la cohésion mécanique mais aussi la conduction électronique, la membrane échangeuse de protons (7) est disposée entre les deux grilles métalliques (9) et (10). La membrane échangeuse de protons (7) est ainsi maintenue à plat, et en contact avec les grilles (9) et (10).

Dans ce dispositif, l'anode (3) est en contact avec le collecteur de courant (1) et l'électrolyte (5). La grille métallique (10) est en contact avec l'électrolyte (5) et la membrane échangeuse de protons (7). La cathode (4) est en contact avec le collecteur de courant (2) et la grille métallique (9). En outre, la grille métallique (9) est également en contact avec le dépôt (8) de précurseur de métal de transition qui est sur une face principale de la membrane échangeuse de protons (7).

Le dépôt (8) du métal tel que le platine, est en contact avec la grille métallique (9), c'est-à-dire du côté de la cathode (4), afin d'assurer la réduction du métal en métal 0.

La membrane échangeuse de protons (7) ne permettant pas la conduction des électrons, le dépôt (8) ne pourrait pas être réduit s'il était positionné du côté de l'anode (3) de la cellule d'électrodéposition. En effet, la membrane échangeuse de protons (7) empêcherait aux électrons de parvenir au dépôt (8).

Le générateur (11) de courant ou de tension permet d'assurer la réduction des ions métalliques constituant le dépôt (7) en générant des électrons et en les acheminant à la cathode (4) de la cellule d'électrodéposition.

La réduction des ions métalliques du dépôt (8) permet de générer des particules de métal 0 sur la surface de la membrane échangeuse de protons (7).

La membrane échangeuse de protons (7) comprenant ce dépôt de métal 0 correspond à un demi-AME.

Un AME dont la membrane échangeuse de protons présente sur ses deux faces principales un dépôt de particules de métal 0, peut être obtenu à partir de ce demi-AME. Il s'agit alors de réitérer, sur la face principale de la membrane dépourvue de particules de métal 0, les étapes du procédé objet de l'invention.

Le deuxième dépôt peut être réalisé à partir d'une composition de métal pouvant être identique ou distincte de celle mise en oeuvre pour préparer le demi-AME.

Comme déjà indiqué, la réduction des ions métalliques du dépôt (8) en particules de métal 0, est assurée par les électrons générés par le générateur (11) de courant ou de tension.

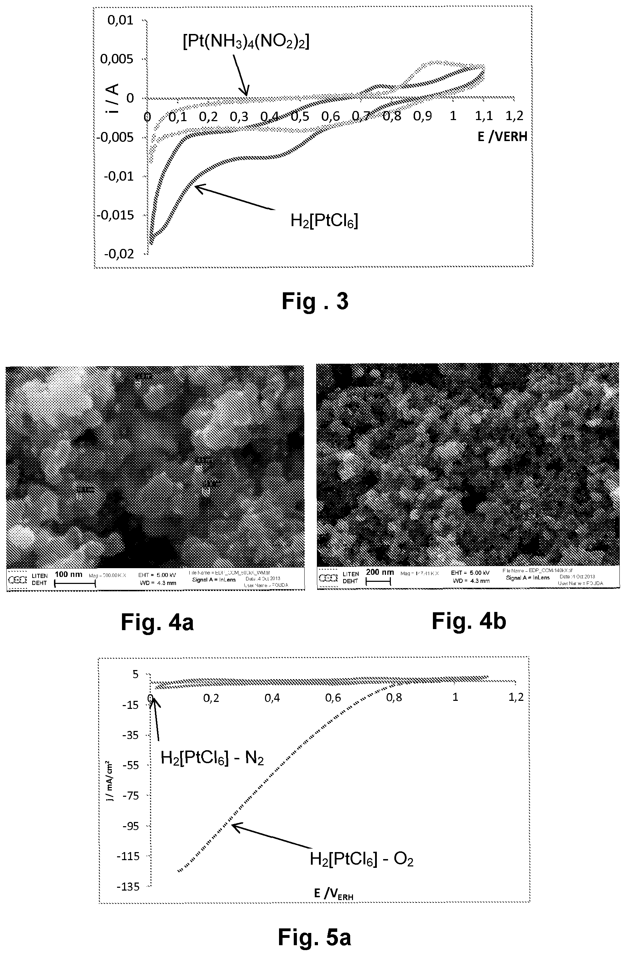

Le potentiel appliqué entre les électrodes (3) et (4) de la cellule d'électrodéposition dépend du précurseur d'un métal de transition utilisé. Par exemple, le potentiel redox du couple $ptCl_6^{2-}/Pt$ se situe vers $0.8\ V_{ERH}$ (figure 3). Par conséquent, la réduction de l'ion $PtCl_6^{2-}$ en platine 0 nécessite un potentiel inférieur à $0.8\ V_{ERH}$.

Il est également à noter qu'un potentiel inférieur à $0\ V_{ERH}$ entraine la réduction des protons $H^+$ en hydrogène $H_2$. Il est également connu que cette réaction favorise la dispersion des particules de métal 0. Ainsi, il peut être avantageux d'appliquer une charge en coulombs au moins 5 à 10 fois supérieure à la valeur théorique afin de s'assurer que tous les ions Pt(IV) soient réduits en Pt(0).

Ainsi, pour chaque type de précurseur d'un métal de transition utilisé, il est nécessaire de déterminer la fenêtre en potentiel lorsque la réduction est réalisée par balayage en potentiel. Dans le cas d'un signal en courant, ce n'est pas nécessaire, n'importe quel courant de réduction peut être envisagé.

Seule la borne supérieure doit être déterminée, étant donné que la borne inférieure de cette plage de potentiel est indépendante du précurseur d'un métal de transition utilisé.

En ce qui concerne le chargement de l'électrode, c'est-à-dire la quantité de particules de métal, il est aisément déduit de la quantité de composé déposée sur la membrane. Par exemple, lorsque 1g $H_2[PtCl_6]$ (masse molaire de 409.81 g/mol) est déposé, cela correspond, après réduction du platine (masse molaire de 195 g/mol) à 0.475g de platine 0, soit un ratio $H_2[PtCl_6]/Pt$ égal à 2.10. De la même manière, le ratio $[Pt(NH_3)_4(NO_2)_2]/Pt$ est égal à 1.98.

**EXEMPLES DE REALISATION DE L'INVENTION**

Un demi-AME a été préparé par mise en oeuvre du procédé objet de la présente invention. Son comportement électrochimique a été évalué en configuration ½ pile.

Formation d'un demi-AME selon l'invention à partir du précurseur $H_2[PtCl_6]$

Une composition est préparée en mélangeant :

- 5 ml d'un solvant constitué du mélange suivant : 18 mL d'isopropanol, 3 ml de solution de Nafion® à 5 wt. % dans de l'isopropanol, et 90 µl de glycérol ;
- 70 mg de particules de carbone ; et

- 80 mg de $H_2[PtCl_6]$.

Cette composition (encre) est déposée par pulvérisation sur une surface principale d'une membrane échangeuse de protons en Nafion®.

La quantité d'encre déposée est de l'ordre de $1mg/cm^2$ sur $25\ cm^2$ de la surface principale de la membrane. Elle est séchée lors du dépôt.

La membrane est ensuite déposée entre deux grilles métalliques (en titane mais elles peuvent être avantageusement en or), dans une cellule d'électrodéposition comprenant notamment une anode en tantale, et une cathode en carbone (figure 2).

L'électrolyte de la cellule d'électrodéposition est de l'acide sulfurique, $H_2SO_4$, à 0.5M.

Afin de réduire le précurseur $H_2[PtCl_6]$, et ainsi former des particules de platine 0, un signal de dépôt de type voltammétrie cyclique est appliqué entre les électrodes de la cellule d'électrodéposition : 200 mV/s sur 50 cycles dans une fenêtre de potentiel entre $-0.2\ V_{ERH}$ et $0.5\ V_{ERH}$ (ERH = électrode réversible à hydrogène).

Détermination du potentiel de travail pour les précurseurs $H_2[PtCl_6]$ et $[Pt(NH_3)_4(NO_2)_2]$

A titre d'exemple, la fenêtre en potentiel pour les précurseurs $H_2[PtCl_6]$ et $[Pt(NH_3)_4(NO_2)_2]$ a été déterminé (Figure 3).

Dans cet exemple, 20 mM de $H_2[PtCl_6]$ et 20 mM de $[Pt(NH_3)_4(NO_2)_2]$ ont été dissous dans 0.5 M $H_2SO_4$. En utilisant une électrode poreuse de carbone comme électrode de travail, et en balayant entre $0\ V_{ERH}$ et $1.1\ V_{EHR}$, on identifie la zone où le platine est réduit. Alors que pour $H_2[PtCl_6]$ le début de la réduction du sel de platine se situe plutôt vers $0.8\ V_{ERH}$, elle se situe vers $0.9\ V_{ERH}$ pour $[Pt(NH_3)_4(NO_2)_2]$.

Les deux réactions suivantes correspondent à la réduction du précurseur $H_2[PtCl_6]$ (figure 3) :

$$PtCl_6^{2-} + 2\ e^- \rightarrow PtCl_4^{2-} + 2\ Cl^-$$

$$E_{eq} = 0.73\ V_{ERH}$$

$$PtCl_4^{2-} + 2\ e^- \rightarrow Pt + 4\ Cl^-$$

$$E_{eq} = 0.76\ V_{ERH}$$

Ces deux réactions correspondent aux vagues de réduction entre $0.7\ V_{ERH}$ et $0.6\ V_{ERH}$ et entre $0.5\ V_{ERH}$ et $0.4\ V_{ERH}$ des voltammogrammes de la figure 3.

Quantité de platine déposé sur la membrane

Eu égard à la composition de l'encre qui a été déposée sur la membrane, dans 1 $mg_{sec}/cm^2$ d'encre, il

y a 43% en poids de $H_2[PtCl_6]$ ce qui correspond à 430 $\mu g/cm^2$ de sel platine, et donc à 204 $\mu g/cm^2$ de platine 0.

La composition déposée comprend 80mg de $H_2[PtCl_6]$, 70mg de particules de carbone, 38mg de Nafion®, et 31.5 mg de glycérol. Le glycérol étant évaporée lors du dépôt par pulvérisation, son poids n'est pas pris en compte pour déterminer la quantité de platine déposé.

Formation du demi-AME et test électrochimique du demi-AME obtenu à partir du précurseur $H_2[PtCl_6]$

Après rinçage de l'assemblage membrane-électrode ainsi obtenu, 0.385 cm² du demi-AME sont placés dans un montage électrochimique de type ½ pile.

Les figures 4a et 4b montrent les images à balayage électronique de demi-AME comportant des nanoparticules de Pt de à 10-15 nm réparties à la surface des particules de carbones à des zones où l'accès électronique et ionique est garanti. Ce demi-AME est obtenu à partir du précurseur $H_2[PtCl_6]$.

Les caractéristiques électrochimiques de ce demi-AME sont évaluées en ½ pile.

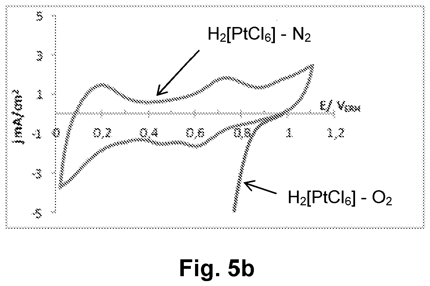

La figure 5 montre la signature électrochimique du platine 0, à savoir un pic entre 0.1 $V_{ERH}$ et 0.3 $V_{ERH}$ sous atmosphère d'azote. Ce pic correspond à la désorption/adsorption des atomes d'hydrogènes à la surface des particules de Pt, mais aussi à la réactivité du Pt vis-à-vis à de l'oxygène puisqu'à 0.2 $V_{ERH}$ l'intensité sous oxygène est 60 fois plus importante que sous azote.

**Revendications**

**1.** Procédé de préparation par électrodéposition d'un assemblage membrane électrode pour pile à combustible, comprenant les étapes suivantes :

- dépôt d'une composition contenant au moins un précurseur d'un métal de transition et des particules électroniquement conductrices, sur une face principale d'une membrane échangeuse de protons ;
- séchage du dépôt ;
- positionnement de la membrane échangeuse de protons dans une cellule d'électrodéposition ;
- réduction du précurseur d'un métal de transition en particules de métal de transition présentant un degré d'oxydation égal à 0, par circulation d'un courant électrique dans la cellule d'électrodéposition ;
- obtention d'un assemblage membrane électrode dont la membrane échangeuse de protons comprend une face principale contenant des particules du métal de transition présentant un degré d'oxydation égal à 0.

**2.** Procédé selon la revendication 1, *caractérisé en ce que* la membrane échangeuse de protons est en un matériau choisi dans le groupe comprenant les polymères acides perfluorosulfoniques.

**3.** Procédé selon la revendication 1 ou 2, *caractérisé en ce que* le précurseur d'un métal de transition est anionique et dépourvu d'halogènes.

**4.** Procédé selon la revendication 1 ou 2, *caractérisé en ce que* le précurseur d'un métal de transition est choisi dans le groupe comprenant $H_2[Pt(OH)_6]$ ; $H_2[Pt(NO_2)_2SO_4]$ ; $(NO_2)_2[Pt(NH_3)_4]$ ; $H_2[PtCl_6]$ ; et leurs mélanges.

**5.** Procédé selon l'une des revendications 1 à 4, *caractérisé en ce que* la réduction du précurseur d'un métal de transition est réalisée à un potentiel compris entre - 0.2 et 1.1 volts.

**6.** Procédé selon l'une des revendications 1 à 5, *caractérisé en ce que* la composition contenant au moins un précurseur d'un métal de transition comprend également au moins un composé choisi dans le groupe comprenant :

- un ionomère ;
- un solvant ; et
- un humectant.

**7.** Procédé selon l'une des revendications 1 à 6, *caractérisé en ce que* la composition est déposée par pulvérisation.

**8.** Procédé selon l'une des revendications 1 à 7, *caractérisé en ce que* la surface principale de la membrane échangeuse de protons sur laquelle est déposée la composition, comprend 50 à 500 microgrammes de métal de transition par centimètre carré à l'issue de l'étape de réduction.

**9.** Procédé selon l'une des revendications 1 à 7, *caractérisé en ce que* la face principale la membrane échangeuse de protons, opposée à la face principale sur laquelle est réalisé le dépôt, comprend des particules de métal de transition présentant un degré d'oxydation égal à 0.

**Patentansprüche**

**1.** Verfahren zur Herstellung einer Membran-Elektrode-Einheit für Brennstoffzelle mittels Galvanischer Abscheidung, das die folgenden Etappen umfasst:

- Abscheiden einer Zusammensetzung, die mindestens einen Vorläufer eines Übergangsmetalls sowie elektronisch leitende Teilchen enthält, auf einer Hauptseite einer Protonenaustauschmembran;
- Trocknen der abgeschiedenen Schicht;
- Positionierung der Protonenaustauschmembran in einer Galvanikzelle;
- Reduktion des Vorläufers eines Übergangsmetalls in Übergangsmetallteilchen mit einem Oxidationsgrad gleich 0, indem ein elektrischer Strom in die Galvanikzelle geleitet wird;
- Erhalt einer Membran-Elektrode-Einheit, bei der die Protonenaustauschmembran eine Hauptseite umfasst, die Übergangsmetallteilchen mit einem Oxidationsgrad gleich 0 enthält.

2. Verfahren nach Anspruch 1, **dadurch gekennzeichnet, dass** es sich bei der Protonenaustauschmembran um ein Material handelt, das aus der Gruppe ausgewählt wird, zu der die Perfluorsulfonsäurepolymere gehören.

3. Verfahren gemäß Anspruch 1 oder 2, **dadurch gekennzeichnet, dass** der Vorläufer eines Übergangsmetalls anionisch ist und frei von Halogenen ist.

4. Verfahren gemäß Anspruch 1 oder 2, **dadurch gekennzeichnet, dass** der Vorläufer eines Übergangsmetalls aus der Gruppe ausgewählt wird, zu der $H_2[Pt(OH)_6]$; $H_2[Pt(NO_2)_2SO_4]$; $(NO_2)_2[Pt(NH_3)_4]$; $H_2[PtCl_6]$; und ihre Mischungen gehören

5. Verfahren gemäß einem der Ansprüche 1 bis 4, **dadurch gekennzeichnet, dass** die Reduktion des Vorläufers eines Übergangsmetalls mit einem Potential zwischen -0.2 und 1.1 Volts ausgeführt wird.

6. Verfahren gemäß einem der Ansprüche 1 bis 5, **dadurch gekennzeichnet, dass** die Zusammensetzung, die mindestens einen Vorläufer eines Übergangsmetalls umfasst, auch eine Verbindung enthält, die aus der Gruppe umfassend:

   - ein Ionomer;
   - ein Lösungsmittel; und
   - ein Feuchthaltemittel ausgewählt wird.

7. Verfahren gemäß einem der Ansprüche 1 bis 6, **dadurch gekennzeichnet, dass** die Zusammensetzung durch Pulverisierung aufgebracht wird.

8. Verfahren gemäß einem der Ansprüche 1 bis 7, **dadurch gekennzeichnet, dass** die Hauptfläche der Protonenaustauschmembran, auf der die Zusammensetzung abgeschieden wird, am Ende der Reduktionsetappe 50 bis 500 Mikrogramm Übergangsmetall pro Quadratzentimeter enthält.

9. Verfahren gemäß einem der Ansprüche 1 bis 7, **da-**

**durch gekennzeichnet, dass** die Hauptseite der Protonenaustauschmembran, gegenüber der Hauptseite, auf der die Schicht abgeschieden wird, Übergangsmetallteilchen mit einem Oxidationsgrad gleich 0 enthält.

**Claims**

1. A method of preparing by electrodeposition a membrane electrode assembly for a fuel cell, comprising the steps of:

   - depositing a composition containing at least one precursor of a transition metal and electronically-conductive particles, on a main surface of a proton exchange membrane;
   - drying the deposit;
   - positioning the proton exchange membrane in an electrodeposition cell;
   - reducing the transition metal precursor made of transition metal particles having a degree of oxidation equal to 0, by flowing of an electric current through the electrodeposition cell;
   - obtaining a membrane electrode assembly having its proton exchange membrane comprising a main surface containing particles of the transition metal having a degree of oxidation equal to 0.

2. The method of claim 1, wherein the proton exchange membrane is made of a material selected from the group comprising perfluorosulfonic acid polymers.

3. The method of claim 1 or 2, wherein the transition metal precursor is anionic and halogen-free.

4. The method of claim 1 or 2, wherein the transition metal precursor is selected from the group comprising $H_2[Pt(OH)_6]$; $H_2[Pt(NO_2)_2SO_4]$; $(NO_2)_2[Pt(NH_3)_4]$; $H_2[PtCl_6]$; and mixtures thereof.

5. The method of any of claims 1 to 4, wherein the reduction of the transition metal precursor is performed at a potential in the range from -0.2 to 1.1 volt.

6. The method of any of claims 1 to 5, wherein the composition containing at least one precursor of a transition metal also comprises at least one compound selected from the group comprising:

   - an ionomer;
   - a solvent; and
   - a humectant.

7. The method of any of claims 1 to 6, wherein the composition is deposited by spraying.

8. The method of any of claims 1 to 7, wherein the main surface of the proton exchange membrane having the composition deposited thereon comprises from 50 to 500 micrograms of transition metal per square centimeter at the end of the reduction step.

9. The method of any of claims 1 to 7, wherein the main surface of the proton exchange membrane, opposite to the main surface having the deposition performed thereon, comprises transition metal particles having a degree of oxidation equal to 0.

H₂, CH₃OH, ...

ANODE:
$H_2 \rightarrow 2 (H^+ + e^-)$

$O_2$, air

CATHODE :
$\frac{1}{2} O_2 + 2 (H^+ + e^-) \rightarrow H_2O$

14   16        12   15   13

**Fig. 1**

11   9   4

N₂

2

N₂

1   3   5   6   10   7   8

**Fig. 2**

**Fig . 3**

**Fig. 4a**

**Fig. 4b**

**Fig. 5a**

**Fig. 5b**

**EP 3 108 040 B1**

## RÉFÉRENCES CITÉES DANS LA DESCRIPTION

**Documents brevets cités dans la description**

- US 2004112754 A1
- US 6277261 B1